# EUROPEAN PATENT SPECIFICATION

(11) **EP 4 516 184 B1**
(45) Date of publication and mention of the grant of the patent: **27.05.2026**
(21) Application number: 24195968.3
(22) Date of filing: 22.08.2024
(51) Int. Cl.: A47L 5/36, A47L 7/00, A47L 9/02

(54) **CLEANING TOOL FOR A SURFACE CLEANER**
REINIGUNGSWERKZEUG FÜR EINEN OBERFLÄCHENREINIGER
OUTIL DE NETTOYAGE POUR UN NETTOYEUR DE SURFACE

(30) Priority: 30.08.2023 US 202363579558 P
(43) Date of publication of application: 05.03.2025
(60) Divisional application: 26172519.6
(73) Proprietor: BISSELL Inc., Grand Rapids, MI 49544 (US)
(72) Inventor: Smith, Derek, Grand Rapids, MI 49544 (US)
(74) Representative: Sandersons

(56) References cited:
- US-A1- 2009 094 788
- US-B1- 6 687 952

## Description

### FIELD OF THE INVENTION

The present invention relates generally to accessory tools for use with extraction cleaners, and more particularly to accessory tools which may be used with extraction cleaners having a fluid delivery system and a fluid recovery system.

### BACKGROUND OF THE INVENTION

Surface cleaners, such as vacuum cleaners, use suction to collect debris and/or fluid to clean soft surfaces, such as carpets, flooring, rugs, upholstery, and the like, as well as hard surfaces including wood, vinyl, tile, composites, etc. Surface cleaners can be in the form of extraction cleaners that are used to clean surfaces by applying a cleaning solution and then extracting the cleaning solution and entrained debris. In some implementations, surface cleaners can include a hose coupled with an accessory tool. Accessory tools for use with surface cleaners typically include a suction nozzle through which liquid and entrained debris can be extracted from a surface during a cleaning process. An extraction cleaner according to the preamble of claim 1 is already known e.g. from US-A-2009094788.

### BRIEF SUMMARY

According to one aspect of the present invention, an extraction cleaner includes an accessory hose and a suction source. The extraction cleaner includes a hose in fluid communication with the suction source and a cleaning tool adapted to couple with the hose. A tool body defines a suction pathway in fluid communication with the suction source. A removable tank defines an access opening to a reservoir. A suction nozzle defines a suction nozzle inlet in communication with the suction pathway. The suction nozzle includes a lens, and the lens defines a suction channel. An adapter portion defines an outlet to the suction pathway and is configured to selectively couple the tool with the hose. The lens is adjustable between at least a first position and a second position, wherein the second position of the lens is extended outwardly and a volume of the suction channel is increased.

According to another aspect of the present invention, a cleaning tool is adapted to couple with a hose of an extraction cleaner including a suction source. The cleaning tool includes a tool body defining a suction pathway in fluid communication with the suction source. A removable tank defines an access opening to a reservoir. A hose adapter defines an outlet to the suction pathway. A suction nozzle defines a suction nozzle inlet in fluid communication with the suction pathway. An agitator block is coupled to the suction nozzle, wherein the agitator block is adjustable between an agitation position and a self-clean position.

According to yet another aspect of the present invention, a cleaning tool for selective attachment to an extraction cleaner includes an accessory hose and a suction source including a tool body defining a suction pathway in fluid communication with the suction source. A removable tank defines an access opening to a reservoir. A hose adapter defines an outlet to the suction pathway. A suction nozzle defines a suction nozzle inlet in communication with the suction pathway. The suction nozzle includes a lens and the lens defines a suction channel. An agitator block is coupled to the suction nozzle, wherein the agitator block is adjustable between an agitation position and a self-clean position. In the self-clean position, the agitator block covers the suction nozzle inlet, and in the agitation position, the agitator block is disposed rearward of the suction nozzle inlet.

These and other features, advantages, and objects of the present invention will be further understood and appreciated by those skilled in the art by reference to the following specification, claims, and appended drawings.

### BRIEF DESCRIPTION OF THE DRAWINGS

In the drawings:
FIG. 1 is a schematic block diagram illustrating a surface cleaner and cleaning tool system, according to various aspects of the present invention;
FIG. 2 is a top perspective view of a cleaning tool for a surface cleaner, according to various aspects of the present invention;
FIG. 3 is a top perspective view of a cleaning tool and an extraction cleaner, according to various aspects of the present invention;
FIG. 4 is a side elevational view of a cleaning tool for a surface cleaner, according to various aspects of the present invention;
FIG. 5 is a side elevational cross-sectional view taken along line V-V of FIG. 2, according to various aspects of the present invention;
FIG. 6 is a bottom view of a suction nozzle of a cleaning tool for a surface cleaner shown in one example of an agitation position, according to various aspects of the present invention;
FIG. 7 is a bottom view of a suction nozzle of a cleaning tool for a surface cleaner shown in one example of a self-clean position, according to various aspects of the present invention;
FIG. 8 is a cross-sectional view along line VIII-VIII of FIG. 7 illustrating a portion of the suction nozzle in one example of a self-clean position, according to various aspects of the present invention;
FIG. 9 is a bottom perspective view of a suction nozzle of a cleaning tool for a surface cleaner shown in one example of a lens first position, according to various aspects of the present invention;
FIG. 10 is a bottom perspective view of a suction nozzle of a cleaning tool for a surface cleaner shown in one example of a lens second position, according to various aspects of the present invention; and
FIG. 11 is a partially exploded, side perspective view of a cleaning tool for a surface cleaner, according to various aspects of the present invention.

### DETAILED DESCRIPTION

The present illustrated embodiments reside primarily in combinations of method steps and apparatus components related to a cleaning tool for a surface cleaner. Accordingly, the apparatus components and method steps have been represented, where appropriate, by conventional symbols in the drawings, showing only those specific details that are pertinent to understanding the embodiments of the present disclosure so as not to obscure the disclosure with details that will be readily apparent to those of ordinary skill in the art having the benefit of the description herein. Further, like numerals in the description and drawings represent like elements.

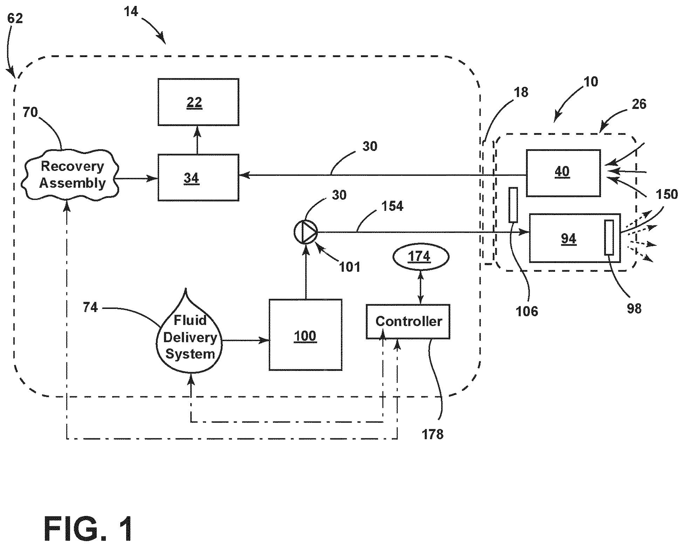

For purposes of description herein, the terms "upper," "lower," "right," "left," "rear," "front," "vertical," "horizontal," and derivatives thereof, shall relate to the disclosure as oriented in FIG. 1. Unless stated otherwise, the term "front" shall refer to a surface closest to an intended viewer, and the term "rear" shall refer to a surface furthest from the intended viewer. However, it is to be understood that the disclosure may assume various alternative orientations, except where expressly specified to the contrary. It is also to be understood that the specific structures and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

The terms "including," "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element preceded by "comprises a . . ." does not, without more constraints, preclude the existence of additional identical elements in the process, method, article, or apparatus that comprises the element.

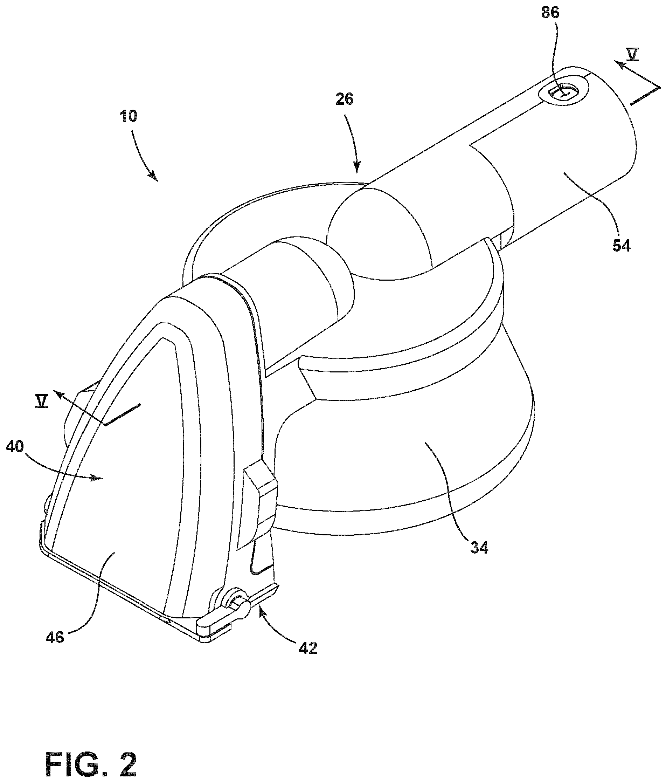

With reference to FIGS. 1-3, and 5, reference numeral 10 generally designates a cleaning tool for a surface cleaner. In some implementations, the surface cleaner is in the form of an extraction cleaner 14 including an accessory hose 18 and a suction source 22. The hose 18 is in fluid communication with the suction source 22. The cleaning tool 10 is adapted to couple with the hose 18. The cleaning tool 10 includes a tool body 26 defining a suction pathway 30 that is in fluid communication with the suction source 22. The tool body 26 includes a removable tank 34 that defines an access opening 36 to a reservoir 38. A suction nozzle 40 on the tool body 26 defines a suction nozzle inlet 42 that is in communication with the suction pathway 30. The suction nozzle 40 includes a lens 46 and the lens 46 defines a suction channel 50. The tool body 26 further includes an adapter portion 54 defining an outlet 58 to the suction pathway 30 and is configured to selectively couple the cleaning tool 10 with the hose 18. In some aspects, the lens 46 is adjustable between at least a first position and a second position, wherein in the second position the lens 46 is extended outwardly and a volume of the suction channel 50 is increased.

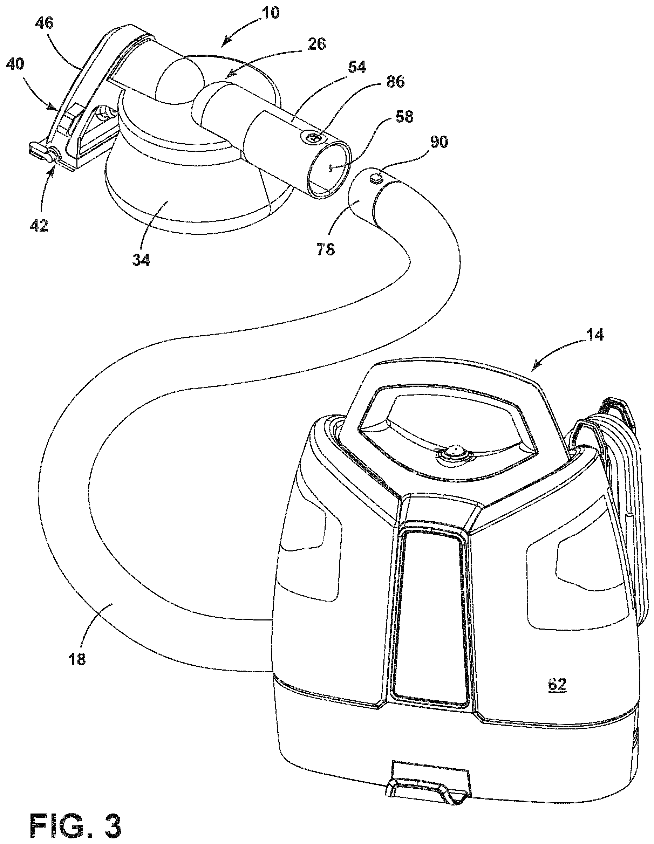

Portable surface cleaning apparatuses, such as the extraction cleaner 14, shown in phantom in FIG. 3 and as described herein, may perform the same, or similar, functions as upright surface cleaning apparatuses. Portable surface cleaning apparatuses (e.g., portable extraction cleaners), and upright surface cleaning apparatuses can provide a suction effect to extract debris that is on or in an underlying surface. While various aspects of the disclosure are described with respect to the extraction cleaner 14, it is within the scope of the disclosure for the surface cleaning apparatus to include any suitable cleaner, including, but not limited to, various extraction cleaners, handheld cleaners, and upright surface cleaning apparatuses. Accordingly, the cleaning tool 10 may be used with an accessory hose of any surface cleaner, including dry vacuum cleaners.

The illustrated extraction cleaner 14, may be in the form of a wet-type extraction cleaner and is merely an exemplary application with which aspects of the disclosure may be practiced. As such, it will be understood that aspects and features of the disclosure may be used for other wet-type extraction cleaner configurations and employed for any logically relevant type of deep cleaning system. Moreover, only select components of the extraction cleaner systems and cleanout assemblies are shown and described in additional detail below. Nevertheless, the systems assemblies discussed herein may include numerous additional and alternative features, and other available peripheral components, for carrying out the various methods and functions of this disclosure. Non-limiting examples of extraction cleaners that the cleaning tool 10 can be utilized with are disclosed in U.S. Patent No. 9,474,424; U.S. Patent No. 8,549,697; U.S. Patent No. 7,073,226; U.S. Patent No. 10,188,252; and U.S. Patent No. 9,107,558.

Referring now to FIGS. 1 and 3, various functional subsystems of the extraction cleaner 14 are illustrated in a schematic block diagram. These functional subsystems may be arranged into any desired configuration, including upright-type extraction devices, canister-type extraction devices, pod-type extraction devices, handheld extraction devices, autonomous and robotic cleaning devices, and commercial cleaners. The cleaning tool 10 can be coupled with extraction cleaner 14 to provide suction and/or deliver a cleaning fluid to a surface to be cleaned. As such, the extraction cleaner 14 can include a housing 62 that accommodates various components and functional systems of the extraction cleaner 14. A recovery assembly 70 may be provided for removing and temporarily storing (e.g., in a recovery tank) debris and/or excess cleaning fluid from the surface. A fluid delivery system 74 may be provided for distributing cleaning fluid to the surface.

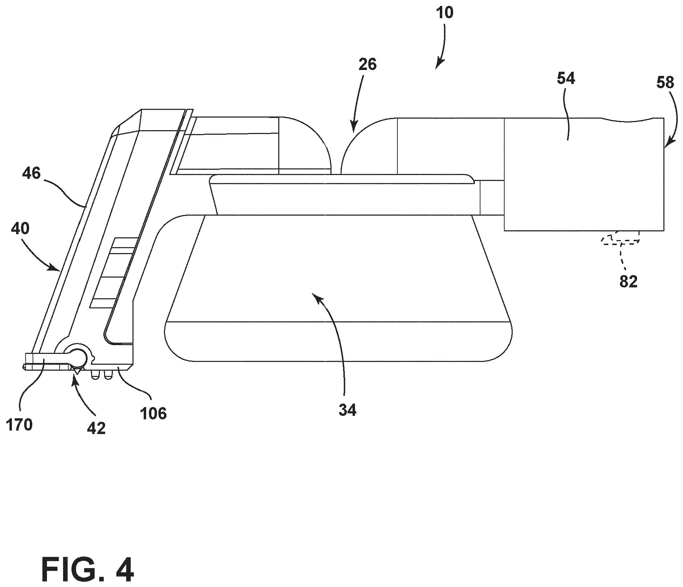

As illustrated in FIG. 3, the illustrative extraction cleaner 14 includes the hose 18, or "flexible hose," that can be selectively fluidly coupled to the cleaning tool 10 and forms a least a portion of the suction pathway 30 therethrough. In some aspects, the flexible hose 18 can provide a fluid delivery pathway and an airflow pathway from the extraction cleaner 14 to the cleaning tool 10. Again, the cleaning tool 10 can be coupled with the hose 18 via the adapter portion 54. Thus, the cleaning tool 10 is adapted to couple with the hose 18. As illustrated, the cleaning tool 10 can be coupled with a wand 78, which is coupled to a distal end of the hose 18. Optionally, the wand 78 or cleaning tool 10 includes a spray trigger 82 (FIG. 4) that can be depressed to activate a liquid delivery state. In some aspects, the wand 78 is sized to operate as a "grip" and the spray trigger 82 may be located on a bottom side of the wand 78.

The adapter portion 54 may define an aperture 86 configured to receive a tab 90 on the wand 78. In this way, the hose 18 can slide into engagement with the adapter portion 54 where the tab 90 is retained within the aperture 86. The hose 18 can be removed from the adapter portion 54 upon depression of the tab 90 and pulling the hose 18 away from the adapter portion 54. However, the adapter portion 54 may include any suitable retention feature to selectively couple the cleaning tool 10 with the hose 18 of the extraction cleaner 14. For example, the aperture 86 and tab 90 may be omitted where the adapter portion 54 relies upon a transitional fit with the hose 18. In another example, the adapter portion 54 may be in the form of a clamp configured to retain the hose 18 thereto.

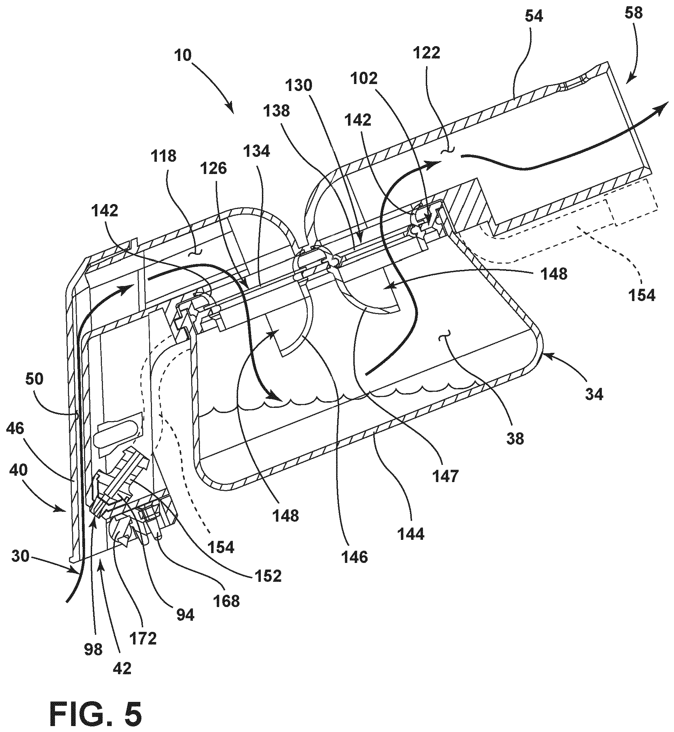

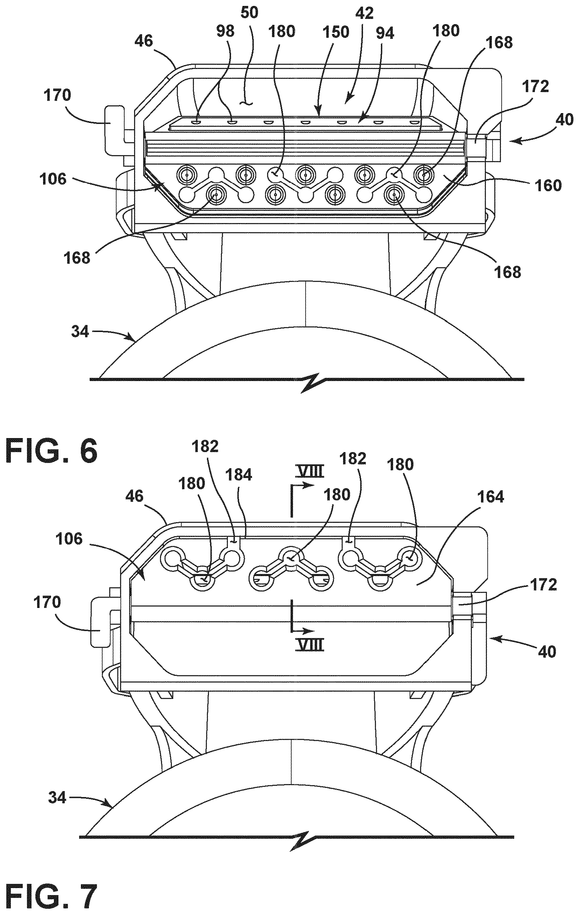

Turning to FIGS. 5-6, the fluid delivery system 74 is in fluid communication with the cleaning tool 10, which may include at least one fluid distributor 94. The fluid distributor 94 may include one or more distributor outlets 98 for ejecting cleaning fluid onto a surface being cleaned. The distributor outlet(s) 98 may be disposed on or within the cleaning tool 10 to deliver fluid onto the surface. In some aspects, fluid distributor 94 is positioned at an entrance of the suction nozzle inlet 42. The distributor outlet(s) 98 may include any suitable structure, such as a nozzle or spray tip or a distributed arrangement of distributor outlets 98. As illustrated in FIG. 6, for example, the fluid distributor 94 includes a plurality of serially aligned outlets 98 that dispense cleaning fluid to a surface. An optional fluid heater 100 (FIG. 1) may be fluidly interposed between a fluid container associated with the extraction cleaner 14 and the fluid distributor 94 to selectively heat the cleaning fluid prior to being delivered through the distributor outlets 98 (e.g., via a liquid pump 101) to the surface. In yet another example, the cleaning fluid can be heated using exhaust air from a motor-cooling exhaust pathway for the suction source 22.

The suction source 22 carried by the extraction cleaner 14 is in fluid communication with the suction nozzle inlet 42 of the cleaning tool 10 and is configured to generate a working air stream through the suction pathway 30. The suction pathway 30, which may be an "airflow" pathway, extends from the suction nozzle inlet 42 through the cleaning tool 10, through the hose 18, and through the extraction cleaner 14 to the suction source 22 (e.g., a motor). As illustrated in FIG. 5, the suction pathway 30 through the cleaning tool 10 includes the suction nozzle inlet 42 of the suction nozzle 40, through the tank 34, and exits the tool body 26 at the outlet 58. The suction source 22 may be positioned within the main housing 62 (FIG. 3) of the extraction cleaner 14. Accordingly, the suction source 22 can generate a working airflow to draw liquid and entrained debris into the suction pathway 30 via cleaning tool 10.

The term "debris," as used herein, may include dirt, dust, soil, hair, chunky messes, loose material, or other messy substances, etc. The term "recovered fluid," as used herein, primarily encompasses liquids which are recovered from a surface, and may include water, gunk, grime, filthy compositions, cleaning fluids, etc., or mixtures thereof. The term "cleaning fluid," as used herein, primarily encompasses liquids which are provided to a surface, and may include steam, water, compositions, concentrated detergent, diluted detergent, fragrances, deodorizers, etc., or mixtures thereof.

With reference to FIGS. 4 and 5, the cleaning tool 10 includes the tool body 26, which includes the suction nozzle 40, the tank 34, a lid 102, the adapter portion 54, and an agitator block 106. The agitator block 106 can be adjacent the suction nozzle 40 and may be coupled with the suction nozzle 40. As illustrated, the suction nozzle 40 is disposed at a forward end of the cleaning tool 10 and the adapter portion 54 is disposed at a rear end of the cleaning tool 10, with the tank 34 therebetween. The suction nozzle 40 can include the lens 46. Lens 46 may be in the form of a cover plate which in some examples, is at least partially transparent such that a user can view the interior of the suction nozzle 40. The positioning of the lens 46 can restrict airflow along the forward end of the tool body 26, thereby defining the suction channel 50. Spent cleaning liquid, dirt, and other entrained debris can enter the suction channel 50 and travel to the tank 34 via the suction pathway 30 (working airflow) where it can be collected and prevented from entering the hose 18.

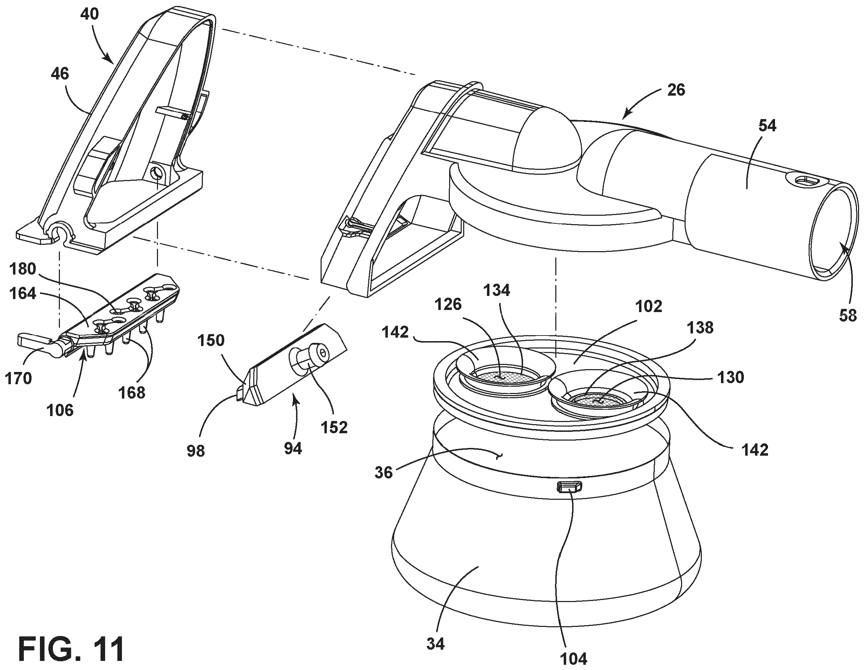

In some examples, the lid 102 selectively covers the access opening 36 to the reservoir 38 (e.g., the lid 102 is removable). The lid 102 can be removed from the tank 34 and/or tool body 26 using any suitable design such as a screwing/twisting connection, snap fit connections, and the like. In one example, a retaining projection 104 (FIG. 11) is provided to couple the lid 102 with the tool body 26. The lid 102 can be an intermediate component which couples the tank 34 to the tool body 26. The tool body 26 can define a first passage 118 and a second passage 122. As illustrated in FIG. 5, the first passage 118 fluidly couples with a first aperture 126 defined by the lid 102, and the second passage 122 fluidly couples a second aperture 130 defined by the lid 102. A first screen 134 and a second screen 138 may be disposed within the first aperture 126 and the second aperture 130, respectively. The first screen 134 and the second screen 138 may be in the form of debris screens, which prevent too large of particles from moving therethrough (e.g., the mesh size is about 75 µm, but is not limited to such). The first screen 134 and the second screen 138 can be coupled to the lid 102 by frames 142. In some aspects, the frames 142 are in the form of gaskets. Air and entrained liquid and debris can enter the tank 34 through a first baffle 146 (adjacent to passage 118). The entrained liquid and debris can be captured within the tank 34 while the working airflow exits the tank 34 through a second baffle 147 (adjacent to the passage 122) and can then travel through the hose 18. The first baffle 146 and the second baffle 147 may each be coupled with one of the frames 142. Accordingly, the first baffle 146 can be adjacent the first screen 134 and the second baffle 147 can be adjacent the second screen 138. As illustrated in FIG. 5, open ends 148 of the baffles 146, 147 face away from each other (e.g., the baffles 146, 147 are in an opposing orientation), which may facilitate separation of air and debris. However, it is within the scope of the disclosure for the baffles 146, 147 to be oriented in any direction, which may include perpendicular to each other. As illustrated, the baffles 146, 147 may include a spherical shape. It has been found that by positioning the baffles 146, 147 in an opposing manner, airflow can be reduced such that suction air can enter the baffle 147 adjacent second passage 122 while liquid and entrained debris can be drawn through baffle 146 adjacent first passage 118, thereby separating air and fluid debris.

The first screen 134 and the second screen 138 may include a same mesh size or different mesh sizes. In some examples, the mesh size of the first screen 134 is larger than the mesh size of the second screen 138. In this way larger particles may be able to enter the reservoir 38 but will be prevented from traveling toward the outlet 58. Therefore, these larger particles can be retained by the cleaning tool 10 yet may not enter the recovery assembly 70 of the extraction cleaner 14. Advantageously, a user can remove the tank 34 that is coupled with the lid 102 and pour any liquid from the reservoir 38 (e.g., while the lid 102 is in place) to strain the solid debris. A user can then remove the lid 102 and access the reservoir 38 to easily remove the solid debris, which will be suitable for emptying directly into a trash container.

Still referring to FIGS. 4 and 5, the illustrated tank 34 includes a flared shape that widens toward a bottom of the tank 34. The flared shape can increase tank capacity and facilitate a wider effective range of use orientations. As such, a user can tip the cleaning tool 10 forward during a cleaning operation and the contents of the reservoir 38 can fill the wider bottom area before entering the first aperture 126 due to a canted orientation of the tank 34 sidewalls. As illustrated, a bottom wall 144 of the tank 34 is flat. While illustrated as a flared tank having a flat bottom wall 144, the tank 34 can include any suitable configuration. For example, the bottom wall 144 can include a convex or concave shape but is not limited to such. In another example, the sidewalls of the tank 34 may be generally straight.

As illustrated in FIGS. 5 and 6, the fluid distributor 94 includes the plurality of outlets 98 disposed within the suction channel 50. The plurality of outlets 98 may be defined on a single fluid distributor 94 or defined on a plurality of fluid distributors 94. For example, the fluid distributor 94 can be in the form of a spray bar 150 having a plurality of outlets 98. In specific implementations, the plurality of outlets 98 may be serially aligned (e.g., positioned inline). In another example, the fluid distributor 94 can include multiple fluid distributors 94, which may be in the form of nozzles or spray tips each having a single outlet 98. The fluid distributor(s) 94 may be coupled to at least one fluid fitting 152 (e.g., a barbed fitting). In some examples, an inlet of the fluid fitting 152 is configured to fluidly couple with a fluid delivery line 154 that is in fluid communication with the fluid delivery system 74 of the extraction cleaner 14 to dispense fluid onto the surface to be cleaned. The fluid delivery line 154 can extend through or on the tool body 26, and can include, as illustrated in phantom herein, a flexible tubing that connects the inlet of the fluid distributor 94 with a fluid coupler associated with the adapter portion 54. However, it is within the scope of the disclosure for the fluid distributor 94 to include any suitable fluid connection(s) to receive a supply of fluid from fluid delivery system 74.

Referring now to FIGS. 6, 7 and 11, the agitator block 106 is illustrated in more detail. The agitator block 106 can be adjustable between an agitation position (e.g., FIG. 6) and a self-clean position (e.g., FIG. 7). The agitator block 106 can be in the form of a "strip" and may include a first surface 160 and a second surface 164. The first surface 160 may include a plurality of agitators, such as nubs 168, extending therefrom. The second surface 164 may be planar or flat. In specific implementations, the first surface 160 and the nubs 168 are made of a material that is more flexible (e.g., including a Shore A hardness of about 50 or "medium-soft") than a material used for the first surface 160, which may be made of a rigid plastic. The agitator block 106 can be configured to carry any suitable type of agitator or combination of types of agitators, non-limiting examples of which include elastomeric projections, bristles, microfiber, etc.

In specific implementations, a lever 170 can be coupled to the agitator block 106 and accessible by a user to facilitate movement of the agitator block 106. Applying an effort force to the lever 170 can cause rotation of the agitator block 106 about a longitudinal axis of the suction nozzle inlet 42. In one example, the lever 170 can couple with an axle 172 positioned near the suction nozzle inlet 42, such that upon rotation of the lever 170, the agitator block 106 rotates about the longitudinal axis of the suction nozzle inlet 42 and can flip between the agitation position (FIG. 6) and the self-clean position (FIG. 7). It will be understood that the lever 170 and/or the agitator block 106 may be spring-biased, magnetically-biased, etc. to maintain the agitator block 106 in the agitation position and/or the self-clean position, as discussed in more detail herein. While illustrated as a lever 170 connected to an axle 172, it is within the scope of the disclosure for the agitator block 106 to move using any suitable configuration, such as various switches, levers, knobs, wheels, and the like. Further, it is within the scope of the disclosure for the agitator block 106 to flip between at least a first side and a second side without the use of a lever and the like. For example, the agitator block 106 may be removed and reinserted into the cleaning tool 10 in another position and may be snapped or otherwise locked into place.

Still referring to FIGS. 6, 7 and 11, as previously noted, the agitator block 106 may be biased to one of the agitation position and the self-clean position. In one example, a torsion spring can bias the agitator block 106 backward (e.g., the agitation position) and/or forward (e.g., the self-clean position). Optionally, an operation mode of the cleaning tool 10 can be changed based on the position of the agitator block 106. For example, a controller 178 (FIG. 1) can receive input from a momentary switch 174 that the agitator block 106 is in the agitation position and the controller 178 can allow cleaning fluid to be dispensed at a first speed. Likewise, the controller 178 can receive input from the momentary switch 174 that the agitator block 106 is in the self-clean position and the controller 178 can allow cleaning fluid to be dispensed at a second speed, different from the first speed. In another example, the controller can activate graphics or indicia (e.g., on the cleaning tool body 26) based on the detected position of the agitator block 106, thereby indicating the cleaning position or mode of the suction nozzle 40.

As illustrated, the agitator block 106 includes a plurality of openings 180 that extend from the first surface 160 to the second surface 164. In some examples, such as that shown in FIG. 7, at least one of the plurality of openings 180 extends to a perimeter 184 or lateral edge of the agitator block 106, thereby forming a vent 182 to the suction nozzle inlet 42. The presence of vents 182 in agitator block 106 may improve suction when the agitator block 106 is in the self-clean position by admitting a venting airflow into the suction nozzle inlet 42. The venting airflow can increase air velocity near the perimeter 184 of the suction nozzle 40 such that airflow can continue to move through the suction channel 50 in a sealed or partially sealed condition (e.g., in the self-clean position).

The agitators, such as the nubs 168, may include any pattern, shape, and material type, based on the application for the cleaning tool 10. The nubs 168 can be constructed of an elastomer, nylon, or any other suitable material. In another example, the agitator block 106 agitators may include a plurality of bristles, which may be made of any suitable synthetic or natural fiber. In either case, the nubs 168 or bristles may be arranged in a plurality of tufts or in a continuous strip. Moreover, the nubs 168 or bristles can be arranged in a single row or multiple rows, optionally with the rows staggered or offset to maximize a density of the nubs 168 or bristles. It is also within the scope of the disclosure for the agitator block 106 to be removable such that a variety of agitator blocks 106 can be interchangeably mounted to the suction nozzle 40 of the cleaning tool 10.

As illustrated in FIG. 6, in the agitation position, the agitator block 106 is disposed rearward of the suction nozzle inlet 42. In the agitation position, the nubs 168 extend toward the surface to be cleaned and, therefore, can agitate the surface and loosen debris to facilitate introduction of the debris into the suction nozzle inlet 42. While illustrated behind the suction nozzle 40 in the agitation position, the agitator block 106 is not limited to such a position. For example, the agitator block 106 may be disposed forward of the suction nozzle inlet 42 in the agitation position.

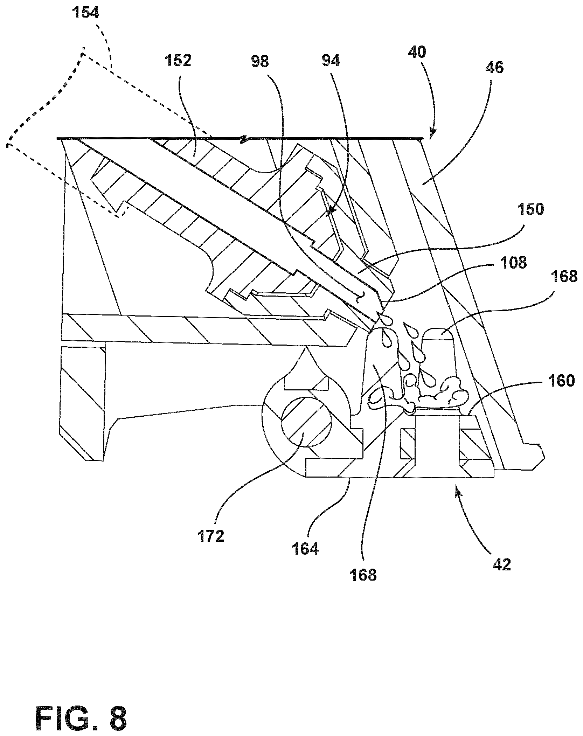

As illustrated in FIGS. 7 and 8, in the self-clean position, the agitator block 106 covers or partially covers the suction nozzle inlet 42. As such, the agitator block 106 may be at least partially disposed within the suction nozzle inlet 42 in the self-clean position. In the self-clean position, the nubs 168 extend from the agitator block 106 toward at least one fluid distributor 94. In this way, the nubs 168 are disposed within the suction channel 50 adjacent the plurality of outlets 98. During a self-clean process, air may be ingested through the openings 180 in the agitator block 106 to loosen debris from the nubs 168, which will be described in further detail below.

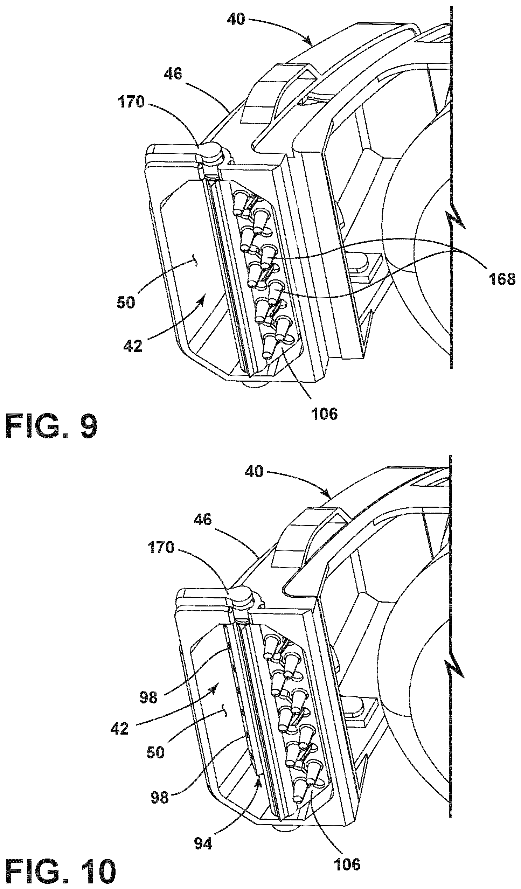

Referring now to FIGS. 9-11, the lens 46 is illustrated in more detail. In some aspects, the lens 46 may be adjustable between at least a first position (FIG. 10) and a second position (FIG. 9). In some aspects, in the second position the lens 46 can be extended outwardly, relative to the first position. In the first position, the lens 46 can define a suction channel depth of about 1 mm to about 3 mm or any/all ranges therebetween. In the second position, the lens 46 can define a suction channel depth that is greater than the depth of the first position, such as a depth of about 3 mm to about 7 mm or any/all ranges therebetween. In this way, when the lens 46 is in the second position, a volume of the suction channel 50 is increased with respect to a volume of the suction channel 50 when the lens is in the first position. In some aspects, the suction channel depth may be substantially constant or may vary along the length of the suction channel 50. In the first position (FIG. 10), the suction channel depth is smaller than the suction channel depth in the second position (FIG. 9) along at least a portion of the length of the suction channel 50. Accordingly, the first position may be referred to as a constricted position. In the constricted position, the suction channel 50 includes a tighter/more restricted airpath that provides higher air velocity, which is more suitable for extraction of liquids and fine debris. When the lens 46 is in the second, extended position, a larger air pass is formed. Therefore, extension of the lens 46 to the second, or extended, position allows uptake of "chunky" messes (messes that may include a mix of liquids and solids of various size and densities) into the suction channel 50 to facilitate capture of the same by the tank 34.

The lens 46 may be adjusted by linear translation or rotational translation (e.g., angled in/out), but is not limited to such. In some implementations the lens 46 can be adjusted by pushing a button (e.g., a finger button) that is coupled with a torsion spring configured to move the lens 46 from the first position to the second position. Optionally the lens 46 can be adjusted by pulling the lens 46 outwardly into the second position and pushing inwardly to return the lens 46 to the first position. In some aspects, a seal or gasket (e.g., an accordion gasket) is coupled to the suction nozzle 40 and configured to maintain suction when the lens 46 is in the first position and the second position. Further, in some examples, the lens 46 is configured to include a physical relationship (e.g., an interlock, a clip, etc.) with respect to the agitator block 106 such that the agitator block 106 may only be deployed or adjusted when the lens 46 is in a predetermined position (e.g., in the agitation position) and the suction channel 50 is the narrowest (e.g., in the first position of the lens 46). Accordingly, the lens 46 may be prevented from inadvertent moving outward/forward.

Referring now to FIGS. 6, 9 and 10, the cleaning tool 10 is illustrated in various exemplary agitation positions where the agitator block 106 is disposed rearward of the suction nozzle inlet 42. Accordingly, the nubs 168 extend from the first surface 160 toward the surface to be cleaned. Also in the agitation position, the agitator block 106 does not block the suction nozzle inlet 42. Therefore, cleaning fluid and entrained debris from the surface being cleaned can enter the suction channel 50 and travel through the suction pathway 30 for separation and storage in the tank 34. Additionally, since the agitator block 106 does not block the suction nozzle inlet 42, any cleaning fluid that is dispensed from the fluid dispenser 94 can flow outwardly from the suction nozzle 40 and contact the surface being cleaned. In some aspects, the cleaning fluid is pressurized and can spray out of outlets 98 in a downward direction.

Referring now to FIGS. 7 and 8, the cleaning tool 10 is illustrated in an exemplary self-clean position where the agitator block 106 at least partially covers the suction nozzle inlet 42. In the self-clean position, the second surface 164 is exposed to an exterior of the cleaning tool, which is reversed from the agitation position in which the first surface 160 is exposed. Since the agitators or nubs 168 are disposed on the first surface 160, which now faces the suction channel 50, the nubs 168 are adjacent to and extend toward the plurality of outlets 98. Accordingly, the nubs 168 are positioned to receive cleaning fluid from the fluid distributor 94. As illustrated in FIG. 8, the fluid distributor 94 is designed to define a deflector portion 108 at each outlet 98. Providing the deflector portion(s) 108 at the outlets 98 (which may be the end of a fluid distribution path) facilitates directing the supplied cleaning fluid down towards first surface 160 to effectively loosen debris that is trapped on/between the nubs 168 and the first surface 160. Thus, the cleaning tool 10 may include an integral agitator cleanout system. When the cleaning tool 10 is operating in a self-clean mode (e.g., when the agitator block 106 is in the self-clean position), cleaning fluid dispensed from the fluid distributor 94 generally does not exit the suction nozzle 40 as the airflow velocity from the suction pathway 30 is stronger than the force of the cleaning fluid spray. Accordingly, a user can adjust, flip, or turn the agitator block 106 into the self-clean position and activate a supply of cleaning fluid, such that the fluid dislodges debris from the nubs 168. Since the suction source 22 is activated, the dislodged debris and the fluid can be drawn through the suction pathway 30 as air is drawn therethrough.

By way of non-limiting example, the cleaning tool 10 may be actuable between at least three distinct operating states: (1) a self-clean mode (an example of which is illustrated in FIG. 7), in which the agitator block 106 concurrently blocks/seals the suction nozzle inlet 42; (2) a fine extraction agitation mode (an example of which is illustrated in FIG. 10), in which the agitator block 106 does not block/seal the suction nozzle inlet 42 and the agitators extend toward the surface to be cleaned, while the lens 46 is in the constricted/narrowest position; and (3) a coarse extraction agitation mode (an example of which is illustrated in FIG. 9), in which the agitator block 106 does not block/seal the suction nozzle inlet 42 and the agitators extend toward the surface to be cleaned, while the lens 46 is in the extended position.

Referring again to FIG. 1, the controller 178 is in electrical communication with the recovery assembly 70 (including the suction source 22) and fluid delivery system 74 via electrical pathways. The controller 178 is configured to control an amount of suction generated by the suction source 22, a supply of liquid (e.g., via pump 101) to the distributor outlets 98, activation of the fluid heater 100, etc. In some aspects, the spray trigger 82 (FIG. 4) associated with the extraction cleaner 14 and/or the cleaning tool 10 is in electrical communication with the controller 178 to control the supply of liquid to the distributor outlets 98. Alternatively, the spray trigger 82 may be coupled with a valve to open/close the valve while a liquid pump, such as, for example, pump 101, is always on (e.g., always pumping fluid). It is within the scope of the disclosure for the extraction cleaner 14 and/or the cleaning tool 10 to include any suitable input controls for controlling operation of the extraction cleaner 14 and/or the cleaning tool 10. For example, input controls may include a power button a cleaning fluid control (e.g., the spray trigger 82), an agitator block control, and other various hardware of the extraction cleaner 14. The electrical pathways may be arranged, at least in part, on a printed circuit board assembly (PCBA). The controller 178 may include a processor, memory, and various control circuitry. Instructions or routines may be stored in the memory and are executable by the processor. The controller 178 is generally configured to gather inputs from the various electronic components, process the inputs, and generate an output response to the gathered input. The processor may include any type of processor capable of performing the functions described herein. The processor may be in the form of a dual-core processor, a multi-core or multi-threaded processor, a digital signal processor, a microcontroller, or any other processor or processing/controlling circuit with multiple processor cores or other independent processing units. The memory may include any type of volatile or non-volatile memory (e.g., RAM, ROM, PSRAM), or data storage devices (e.g., hard disk drives, solid-state drives, etc.) capable of performing the functions described herein. In operation, the memory may store various data and software used during operation of the extraction cleaner 14 such as operating systems, applications, programs, libraries, databases, and drivers. The memory can include a plurality of instructions that, when read by the processor, cause the processor to perform the functions described herein.

The cleaning tool 10 according to aspects of the present disclosure provides a variety of benefits. As set forth in detail herein, the cleaning tool 10 may include an integral agitator cleanout system when the cleaning tool 10 is operating in a self-clean mode. The integral agitator cleanout system provides a much easier/desirable process for cleaning hair, dirt, and other debris from the agitators as a user can avoid actively touching the debris and instead, can rely on the self-clean mode. Additionally, the cleaning tool 10 is configured to capture large debris and, preferably, any liquid within the tank 34 of the cleaning tool 10 such that the large debris and liquid are captured prior to traveling into the hose 18 and, ultimately, the recovery tank of the extraction cleaner 14. Larger debris can get caught within the hose 18 and the recovery assembly 70 and, therefore, is more difficult to clean out than liquid and smaller debris. Trapped, larger debris could affect performance of the extraction cleaner 14 but could also lead to foul odors as the debris decays. Capturing the larger debris in the cleaning tool 10 decreases the likelihood of the larger debris getting trapped in the hose 18 and the recovery assembly 70. Further, capturing liquid within the cleaning tool 10 is desirable, if only to minimize clean-up. Though, if some liquid does enter the hose 18 and/or the recovery assembly 70, it may be made easier to rinse those components out to avoid stains and odors developing as the cleaning tool 10 can significantly reduce the amount of liquid that may enter those components. Accordingly, the construction of the cleaning tool 10 specifically inhibits ingestion of large debris and, in some implementations, liquids from entering the various internal systems (e.g., the recovery system) of the extraction cleaner 14. Likewise, the construction of the cleaning tool 10 enables easy access to sanitize/clean internal components and surfaces of the tool body 26. The cleaning tool 10 is also beneficial for effectively cleaning coarse debris (e.g., pet vomit) from a surface when the lens 46 is in the extended position. Therefore, a user can be prevented from touching the mess with their hands (e.g., such as when the mess leaks through a paper towel during a traditional cleaning procedure). Advantageously, the cleaning tool 10 can be configured to attach to a variety of surface cleaning apparatuses.

The device disclosed herein is further summarized in the following paragraphs and is further characterized by combinations of any and all various aspects described herein.

It will be understood by one having ordinary skill in the art that construction of the described disclosure and other components is not limited to any specific material. Other exemplary embodiments of the invention disclosed herein may be formed from a wide variety of materials, unless described otherwise herein.

For purposes of this disclosure, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

It is also important to note that the construction and arrangement of the elements of the invention, as shown in the exemplary embodiments, is illustrative only. Although only a few embodiments of the present innovations have been described in detail in this invention, those skilled in the art who review this invention will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts, or elements shown as multiple parts may be integrally formed, the operation of the interfaces may be reversed or otherwise varied, the length or width of the structures and/or members or connector or other elements of the system may be varied, the nature or number of adjustment positions provided between the elements may be varied. It should be noted that the elements and/or assemblies of the system may be constructed from any of a wide variety of materials that provide sufficient strength or durability, in any of a wide variety of colors, textures, and combinations.

## Claims

1. An extraction cleaner (14) including an accessory hose (18) and a suction source (22), the extraction cleaner (14) comprising:
a hose (18) in fluid communication with the suction source (22);
a cleaning tool (10) adapted to couple with the hose (18), comprising:
a tool body (26) defining a suction pathway (30) in fluid communication with the suction source (22), comprising:
a removable tank (34) defining an access opening (36) to a reservoir (38);
a suction nozzle (40) defining a suction nozzle inlet (42) in communication with the suction pathway (30), the suction nozzle (40) including a lens (46), the lens (46) defining a suction channel (50); and
an adapter portion (54) defining an outlet (58) to the suction pathway (30) and configured to selectively couple the tool (10) with the hose (18), **characterized in that** the lens (46) is adjustable between at least a first position and a second position, wherein in the second position the lens (46) is extended outwardly and a volume of the suction channel (50) is increased.

2. The extraction cleaner (14) of claim 1, further comprising:
an agitator block (106) coupled to the suction nozzle (40), wherein the agitator block (106) is adjustable between an agitation position and a self-clean position.

3. The extraction cleaner (14) of claim 2, wherein the agitator block (106) rotates about a longitudinal axis of the suction nozzle (40).

4. The extraction cleaner (14) of either one of claims 2 or 3, wherein in the self-clean position, agitators extend from the agitator block (106) toward at least one fluid distributor (94).

5. The extraction cleaner (14) of any one of claims 1-3, further comprising at least one fluid distributor (94) for supplying a cleaning fluid.

6. The extraction cleaner (14) of claim 5, wherein the at least one fluid distributor (94) includes a plurality of distributor outlets (98) disposed within the suction channel (50).

7. The extraction cleaner (14) of either one of claims 2 or 3, wherein in the self-clean position, agitators are disposed within the suction channel (50) adjacent the plurality of distributor outlets (98).

8. The extraction cleaner (14) of claim 5, wherein the at least one fluid distributor (94) is in the form of a spray bar (150) defining a plurality of serially aligned distributor outlets (98).

9. The extraction cleaner (14) of either one of claims 2 or 3, wherein the agitator block (106) includes a plurality of openings (180) and at least one of the plurality of openings (180) extends to a perimeter of the agitator block (106).

10. The extraction cleaner (14) of either one of claims 2 or 3, wherein in the self-clean position, the agitator block (106) covers the suction nozzle inlet (42), and, in the agitation position, the agitator block (106) is disposed rearward of the suction nozzle inlet (42).

11. The extraction cleaner (14) of either one of claims 2 or 3, wherein the agitator block (106) includes a plurality of openings (180) and a plurality of nubs (168).

12. The extraction cleaner (14) of claim 11, wherein at least one of the plurality of openings (180) extends to a perimeter of the agitator block (106).

13. The extraction cleaner (14) of either one of claims 2 or 3, further comprising:
a lever (170) coupled to the agitator block (106), wherein upon rotation of the lever (170), the agitator block (106) flips between the agitation position and the self-clean position.

14. The extraction cleaner (14) of any one of claims 1-3, further comprising:
a lid (102) configured to selectively cover the access opening (36) to the reservoir (38), wherein the lid (102) includes at least one aperture (126, 130) including a screen (134, 138) therein.

15. The extraction cleaner (14) of claim 14, wherein the at least one aperture (126, 130) further comprises a pair of apertures (126, 130), each including a screen (134, 138) therein.

## Patentansprüche

1. Extraktionsreiniger (14) mit einem Zubehörschlauch (18) und einer Saugquelle (22), wobei der Extraktionsreiniger (14) aufweist:
einen Schlauch (18) in Fließverbindung mit der Saugquelle (22),
ein zur Kopplung mit dem Schlauch (18) ausgestaltetes Reinigungswerkzeug (10), das versehen ist mit:
einem Werkzeugkörper (26), der einen Saugweg (30) in Fließverbindung mit der Saugquelle (22) definiert und der aufweist:
einem entnehmbaren Tank (34), der eine Zugangsöffnung (36) zu einem Tank (38) definiert,
einer Saugdüse (40), die einen Saugdüseneinlass (42) in Verbindung mit dem Saugweg (30) definiert, wobei die Saugdüse (40) eine Linse (46) umfasst, wobei die Linse (46) einen Saugkanal (50) definiert, und
einem Adapterbereich (54), der einen Auslass (58) zum Saugweg (30) definiert und der dazu ausgestaltet ist, um das Werkzeug (10) wahlweise mit dem Schlauch (18) zu verbinden,
**dadurch gekennzeichnet, dass** die Linse (46) einstellbar ist zwischen wenigstens einer ersten Position und einer zweiten Position, wobei in der zweiten Position die Linse (46) nach außen vorgeschoben ist und ein Volumen des Saugkanals (50) vergrößert ist.

2. Extraktionsreiniger (14) nach Anspruch 1, weiterhin mit:
einem Kehrblock (106) der mit der Saugdüse (40) verbunden ist, wobei der Kehrblock (106) einstellbar ist zwischen einer Kehrposition und einer Selbstreinigungsposition.

3. Extraktionsreiniger (14) nach Anspruch 2, wobei der Kehrblock (106) sich um eine Längsachse der Saugdüse (40) dreht.

4. Extraktionsreiniger (14) nach einem der Ansprüche 2 oder 3, wobei in der Selbstreinigungsposition Kehrmittel von dem Kehrblock (106) vorstehen zu wenigstens einem Flüssigkeitsverteiler (94).

5. Extraktionsreiniger (14) nach einem der Ansprüche 1-3, der weiterhin wenigstens einen Flüssigkeitsverteiler (94) zur Zufuhr einer Reinigungsflüssigkeit aufweist.

6. Extraktionsreiniger (14) nach Anspruch 5, wobei der wenigstens eine Flüssigkeitsverteiler (94) eine Mehrzahl von Verteilerauslässen (98) umfasst, die innerhalb des Saugkanals (50) angeordnet sind.

7. Extraktionsreiniger (14) nach einem der Ansprüche 2 oder 3, wobei in der Selbstreinigungsposition Kehrmittel innerhalb des Saugkanals (50) benachbart zur Mehrzahl von Verteilerauslässen (98) angeordnet sind.

8. Extraktionsreiniger (14) nach Anspruch 5, wobei der wenigstens eine Flüssigkeitsverteiler (94) die Form eines Sprühbalkens (150) hat, der eine Mehrzahl von reihenförmig ausgerichteten Verteilerauslässen (98) definiert.

9. Extraktionsreiniger (14) nach einem der Ansprüche 2 oder 3, wobei der Kehrblock (106) eine Mehrzahl von Öffnungen (180) aufweist und wenigstens eine aus der Mehrzahl von Öffnungen (180) bis zu einem Außenumfang des Kehrblocks (106).

10. Extraktionsreiniger (14) nach einem der Ansprüche 2 oder 3, wobei der Kehrblock (106) in der Selbstreinigungsposition den Saugdüseneinlass (42) bedeckt und der Kehrblock (106) in der Kehrposition hinter dem Saugdüseneinlass (42) angeordnet ist.

11. Extraktionsreiniger (14) nach einem der Ansprüche 2 oder 3, wobei der Kehrblock (106) eine Mehrzahl von Öffnungen (180) und eine Mehrzahl von Noppen (68) aufweist.

12. Extraktionsreiniger (14) nach Anspruch 11, wobei wenigstens eine aus der Mehrzahl von Öffnungen (180) bis zu einem Außenumfang des Kehrblocks (106) reicht.

13. Extraktionsreiniger (14) nach einem der Ansprüche 2 oder 3, weiterhin mit:
einem Hebel (170) der mit dem Kehrblock (106) verbunden ist, wobei durch Drehen des Hebels (170) der Kehrblock (106) zwischen der Kehrposition und der Selbstreinigungsposition geschwenkt wird.

14. Extraktionsreiniger (14) nach einem der Ansprüche 1-3, weiterhin mit:
einem Deckel (102) der dazu ausgestaltet ist, um die Zugangsöffnung (36) zum Reservoir (38) wahlweise abzudecken, wobei der Deckel (102) wenigstens eine Öffnung (126, 130) mit einem Sieb (134, 138) darin aufweist.

15. Extraktionsreiniger (14) nach Anspruch 14, wobei die wenigstens eine Öffnung (126, 130) ein Paar von Öffnungen (126, 130) umfasst, wobei jede Öffnung ein darin befindliches Sieb (134, 138) enthält.

## Revendications

1. Nettoyeur par extraction (14) comprenant un tuyau accessoire (18) et une source d'aspiration (22), le nettoyeur par extraction (14) comprenant :
un tuyau (18) en communication fluidique avec la source d'aspiration (22) ;
un outil de nettoyage (10) adapté pour être couplé au tuyau (18), comprenant :
un corps d'outil (26) définissant un conduit d'aspiration (30) en communication fluidique avec la source d'aspiration (22), comprenant :
un réservoir amovible (34) définissant une ouverture d'accès (36) vers un réservoir (38) ;
une buse d'aspiration (40) définissant une entrée de buse d'aspiration (42) en communication avec le conduit d'aspiration (30), la buse d'aspiration (40) comprenant une lentille (46), la lentille (46) définissant un canal d'aspiration (50) ; et
une portion d'adaptateur (54) définissant une sortie (58) vers le conduit d'aspiration (30) et configurée pour coupler sélectivement l'outil (10) au tuyau (18), **caractérisé en ce que** la lentille (46) est réglable entre au moins une première position et une deuxième position, dans lequel, dans la deuxième position, la lentille (46) est étendue vers l'extérieur et un volume du canal d'aspiration (50) est augmenté.

2. Nettoyeur par extraction (14) selon la revendication 1, comprenant en outre :
un bloc agitateur (106) couplé à la buse d'aspiration (40), dans lequel le bloc agitateur (106) est réglable entre une position d'agitation et une position d'auto-nettoyage.

3. Nettoyeur par extraction (14) selon la revendication 2, dans lequel le bloc agitateur (106) tourne autour d'un axe longitudinal de la buse d'aspiration (40).

4. Nettoyeur par extraction (14) selon l'une quelconque des revendications 2 ou 3, dans lequel, dans la position d'auto-nettoyage, des agitateurs s'étendent depuis le bloc agitateur (106) en direction d'au moins un distributeur de fluide (94).

5. Nettoyeur par extraction (14) selon l'une quelconque des revendications 1 à 3, comprenant en outre au moins un distributeur de fluide (94) pour distribuer un fluide de nettoyage.

6. Nettoyeur par extraction (14) selon la revendication 5, dans lequel l'au moins un distributeur de fluide (94) comprend une pluralité de sorties de distributeur (98) disposées à l'intérieur du canal d'aspiration (50).

7. Nettoyeur par extraction (14) selon l'une quelconque des revendications 2 ou 3, dans lequel, dans la position d'auto-nettoyage, des agitateurs sont disposés à l'intérieur du canal d'aspiration (50) de manière adjacente à la pluralité de sorties de distributeur (98).

8. Nettoyeur par extraction (14) selon la revendication 5, dans lequel l'au moins un distributeur de fluide (94) se présente sous la forme d'une barre de pulvérisation (150) définissant une pluralité de sorties de distributeur (98) alignées en série.

9. Nettoyeur par extraction (14) selon l'une quelconque des revendications 2 ou 3, dans lequel le bloc agitateur (106) comprend une pluralité d'ouvertures (180) et au moins une de la pluralité d'ouvertures (180) s'étend jusqu'à un périmètre du bloc agitateur (106).

10. Nettoyeur par extraction (14) selon l'une quelconque des revendications 2 ou 3, dans lequel, dans la position d'auto-nettoyage, le bloc agitateur (106) couvre l'entrée de buse d'aspiration (42), et, dans la position d'agitation, le bloc agitateur (106) est disposé en arrière de l'entrée de buse d'aspiration (42).

11. Nettoyeur par extraction (14) selon l'une quelconque des revendications 2 ou 3, dans lequel le bloc agitateur (106) comprend une pluralité d'ouvertures (180) et une pluralité de protubérances (168).

12. Nettoyeur par extraction (14) selon la revendication 11, dans lequel au moins une de la pluralité d'ouvertures (180) s'étend jusqu'à un périmètre du bloc agitateur (106).

13. Nettoyeur par extraction (14) selon l'une quelconque des revendications 2 ou 3, comprenant en outre :
un levier (170) couplé au bloc agitateur (106), dans lequel, lors de la rotation du levier (170), le bloc agitateur (106) bascule entre la position d'agitation et la position d'auto-nettoyage.

14. Nettoyeur par extraction (14) selon l'une quelconque des revendications 1 à 3, comprenant en outre:
un couvercle (102) configuré pour couvrir sélectivement l'ouverture d'accès (36) vers le réservoir (38), dans lequel le couvercle (102) comprend au moins une ouverture (126, 130) comprenant un filtre (134, 138) à l'intérieur de celle-ci.

15. Nettoyeur par extraction (14) selon la revendication 14, dans lequel l'au moins une ouverture (126, 130) comprend en outre une paire d'ouvertures (126, 130), chacune comprenant un filtre (134, 138) à l'intérieur de celle-ci.
